# EUROPEAN PATENT SPECIFICATION

(11) **EP 2 171 013 B1**
(45) Date of publication and mention of the grant of the patent: **03.04.2019**
(21) Application number: 08771864.9
(22) Date of filing: 25.06.2008
(51) Int. Cl.: C09K 5/20, C23F 11/12

(54) **ANTIFREEZE CONCENTRATE AND COOLANT COMPOSITIONS**
GEFRIERSCHUTZKONZENTRAT UND KÜHLZUSAMMENSETZUNG
CONCENTRÉ ANTIGEL ET COMPOSITIONS DE REFROIDISSEMENT

(30) Priority: 28.06.2007 US 769960
(43) Date of publication of application: 07.04.2010
(73) Proprietor: Arteco NV, 2900 Schoten (BE)
(72) Inventor: LIEVENS, Serge S., B-9820 Merelbeke (BE); DEKIMPE, Jurgen P., B-9050 Gent (BE)
(74) Representative: Nederlandsch Octrooibureau
(86) International application number: PCT/US2008/068087
(87) International publication number: WO 2009/006128

(56) References cited:
- EP-A- 0 995 785
- EP-A- 1 449 903
- WO-A-2007/076511
- US-A1- 2006 163 528

## Description

### TECHNICAL FIELD

The invention relates generally to antifreeze compositions exhibiting improved thermal stability at low temperatures.

### BACKGROUND

It is known to use antifreeze compositions in heat exchanging systems and/or for de-icing applications. In these applications, the antifreeze compositions come in contact with various metals, alloys, and other components forming the different parts of the heat exchanging system or the system to be de-iced. Efforts have been made towards the protection from corrosion of parts and components in contact with the antifreeze compositions. Prior art solutions include the addition of various corrosion inhibitors and/or the use of different organic acids for multiple metal protection systems.

Corrosion protection is critical at all temperature ranges. However, at low temperatures, other factors important to the performance of antifreeze compositions come into play, including the unwanted formation of scale and/or deposits. Water is often used to dilute antifreeze compositions. Water quality varies greatly with geographic location, population and degree of industrialization. When hard water is used, scales can be formed from alkaline earth metal carbonate and phosphate deposition. These inorganic films tend to inhibit thermal transfer and thus reduce the heat transfer efficiency of the system. Besides the use of hard water, the use of certain corrosion inhibitors contributes to the formation of deposits, e.g., silicate gellation. In certain additive packages for coolants, silicate/phosphate corrosion inhibitors are used to help protect metal cooling system parts and also as a buffer to control the pH of the antifreeze. When a composition containing silicates/phosphates is mixed with hard water, copious precipitates develop in a short period of time. These precipitates may clog a cooling system, resulting in reduced antifreeze/coolant flow, increased engine operating temperatures and shorter service life. Deposit formation can also result in the physical damage of soft material parts, e.g., water pump seals, engine head seals, hoses, etc. used in the parts and components of the system.

To alleviate the silicate deposit problem, silicate stabilizers can be added to antifreeze compositions. However, at low operating temperatures, e.g., sub-freezing, some additives are not soluble thus further compounding the problem. Ideally, antifreeze compositions should remain transparent and free of insoluble materials in operation as the unwanted formation of deposits/soluble materials decreases the heat transfer property of the composition. And ideally, the antifreeze composition should be environmentally and toxicological friendly.

US2006/163528 describes an aqueous antifreeze composition comprising 10- 50 wt. % of one or more C4-C12 dicarboxylic acids in the form of the alkali metal, ammonium or alkaline earth metal salt.

EP1449903 describes a coolant composition comprising a mixture of a C1-C2 carboxylic acid salt and a C3-C5 carboxylic acid salt.

EP995785 describes an engine coolant combining aliphatic and aromatic WO2007/076511 describes a heat transfer fluid comprising a C3 carboxylate freezing point depressant and a C6-C16 organic acid salt corrosion inhibitor.

There is still a need for a toxicological friendly antifreeze composition, i.e., a composition having improved thermal stability at low temperatures with minimal salt/deposition formation.

### SUMMARY OF THE INVENTION

The invention concerns an antifreeze composition according to claim 1. In one embodiment, the antifreeze composition comprises from 50 to 99.8 wt. % of a freezing point depressant matrix which is a mixture of potassium acetate and monoethylene glycol; 0.1 to 5 wt. % of at least a branched organic acid (C5-C16) or alkali- or amino salt of a branched organic acid (C5-C16); and 0.1 to 5 wt. % of i) an aliphatic mono acid (C5-C12) or alkali- or amino salt of an aliphatic mono acid (C5-C12); or ii) an aromatic organic acid (C7-C18) or alkali- or amino salt of an aromatic organic acid (C7-C18); iii) a substituted aromatic organic acid (C7-C18) or alkali- or amino salt of a substituted aromatic organic acid. In one embodiment, the composition is employed as a concentrate, in admixture with an aqueous antifreeze solution comprising 10 to 90 wt. % by weight of water.

In another aspect, there is provided an antifreeze concentrate composition comprising 50 to 99.8 wt. % of a freezing point depressant matrix which is a mixture of potassium acetate and monoethylene glycols, 0.1 to 10 wt. % of at least one of a 2-ethylhexanoic acid, isononanoic acid and 3,5,5-trimethylhexanoic acid; and 0.1 to 10 wt. % of at least one of heptanoic acid, octanoic acid, nonanoic acid, decanoic acid, undecanoic acid, dodecanoic acid, neodecanoic acid, benzoic acid, 2-hydroxybenzoic acid, p-terbutylbenzoic acid, and mixtures thereof.

There is also provided a method to improve the thermal stability of an antifreeze composition comprising blending into the freezing point depressant matrix of an antifreeze composition a corrosion inhibitor system comprising: a) 0.1 to 10 wt. % of at least a branched organic acid (C5-C16) or alkali- or amino salt of a branched organic acid (C5-C16); and b) 0.1 to 10 wt. % of i) an aliphatic mono acid (C5-C12) or alkali- or amino salt of an aliphatic mono acid (C5-C12); or ii) an aromatic organic acid (C7-C18) or alkali- or amino salt of an aromatic organic acid (C7-C18); iii) a substituted aromatic organic acid (C7-C18) or alkali- or amino salt of a substituted aromatic organic acid.

### DETAILED DESCRIPTION

Definitions for the following terms are provided herein to promote a further understanding of the invention.

The term "antifreeze" refers to a composition which reduces the freezing point of an aqueous solution, or is an aqueous solution with a reduced freezing point with respect to water, e.g., a composition comprising a freezing point depressant.

The term "coolant" refers to a category of liquid antifreeze compositions which have properties that allow an engine to function effectively without freezing, boiling, or corrosion. The performance of an engine coolant must meet or exceed standards set by the American Society for Testing and Materials (A.S.T.M.) and the Society of Automotive Engineers (S.A.E.).

The term "heat transfer fluid" refers to a fluid which flows through a system in order to prevent its overheating, transferring the heat produced within the system to other systems or devices that can utilize or dissipate the heat.

The term "de-icing" fluid refers to a fluid which makes or keeps a system, a device, or a part free of ice, or a fluid which melts ice.

As used herein, the term "antifreeze" composition (or fluid or concentrate) may be used interchangeably with "heat transfer," "coolant," or "de-icing" fluid (composition or concentrate).

In one embodiment of the invention, an antifreeze composition with excellent thermal stability properties is provided. The composition remains relatively clear with minimal deposit formation (that can be visually observed). The composition comprises a combination of corrosion inhibitors in freezing point depressant matrix.

### Freezing Point Depressant Matrix:

A mixture of potassium acetate and monoethylene glycol is employed in the matrix.

In one embodiment, the matrix further comprises additional water soluble organic compounds such as formamide and/or urea, containing an intensively hydrophilic substituent, for an extreme reduction in freezing point. In embodiments the freezing point depressant matrix has a glycol:non-glycol base ratio of 1:2 to 1:20.

Corrosion Inhibitors System: The antifreeze composition further comprises a combination of: a) 0.1 to 10 wt. % of one or more branched organic acids (C5-C16) or alkali- or amino salt of the branched organic acids as a first component; and b) 0.1 to 10 wt. % of one or more linear aliphatic mono- or di-basic acids (C5-C12), aromatic organic acids (C7-C18), or substituted aromatic organic acids (C7-C18) or alkali- or amino salt of the foregoing acids as a second component. The combination improves the thermal stability of the antifreeze compositions as compared to prior art compositions that contain only aliphatic organic acids or substituted aromatic acids.

In one embodiment, the first component comprising at least one of branched organic acids, salts of branched organic acids, and mixtures thereof. Examples include but are not limited to the following branched C4-C18-carboxylic acids and salts thereof: isobutanoic acid, 2-ethylhexanoic acid, isononanoic acid and 3,5,5-trimethylhexanoic acid. In one embodiment, the branched organic first component is 2-ethylhexanoic acid or 3,5,5-trimethylhaxanoic acid.

In one embodiment, the second component is selected from the group of aliphatic mono acids; aliphatic dibasic acids; aromatic organic acids; substituted aromatic organic acids; alkali metal, ammonium, or amine salt of the aforementioned acids; and mixtures thereof.

In one embodiment, the aliphatic mono acid component includes at least a C5-C12 aliphatic monobasic acid or the alkali metal, ammonium, or amine salt thereof. Examples of the acids or isomers include but are not limited to octanoic, nonanoic, decanoic, undecanoic and dodecanoic, and mixtures thereof. Any alkali metal, ammonium, or amine can be used to form the monobasic acid salt. In one embodiment, the second component comprises at least an alkali metal of the aliphatic mono acids with sodium and potassium being used as the alkali metals for use in forming the monobasic acid salt. In another embodiment, octanoic acid is used as the second component.

In one embodiment, the dibasic acid component includes at least a hydrocarbyl C5-C12 dibasic acid or the alkali metal, ammonium, or amine salt of such dibasic acid. Examples include but are not limited to suberic, sebacic, undecanedioic, dodecanedioic, malonic, succinic, glutaric, adipic, pimelic, azelaic, undecanedioic acid, dodecanedioic, dicyclopentadienedicarboxylic, phthalic, terephthalic and mixtures thereof. In one embodiment, the second component comprises at least an alkali metal of the dibasic acid with sodium and potassium being used as the alkali metals for use in forming the acid salt. In a second embodiment, sebacic acid is used as the second component.

Examples of aromatic organic acids and hydroxyl-substituted aromatic organic acids include but not limited to benzoic acids, C1-C8-alkylbenzoic acids/salts thereof, for example o-, m- and p-methylbenzoic acid or p-tert-butylbenzoic acid, C1-C4-alkoxybenzoic acids, for example o-, m- and p-methoxybenzoic acid, hydroxyl-containing aromatic monocarboxylic acids, for example o-, m- or p-hydroxybenzoic acid, o-, m- and p-(hydroxymethyl)benzoic acid, and halobenzoic acids, for example o-, m- or p-fluorobenzoic acid. In one embodiment, the aromatic organic acid is selected from 2-hydroxybenzoic acid, p-terbutylbenzoic acid, mandelic acid and homophthalic acid and salts thereof.

In one embodiment, the carboxylic acids mentioned are present as alkali metal salts, e.g., sodium or potassium salts, or as ammonium salts or substituted ammonium salts (amine salts), for example with ammonia, trialkylamines or trialkanolamines.

In one embodiment, the approximate proportions (based on the amount of the water non-glycol freezing point depressant present) of the combination package are about 0.1 to 15.0 wt. % of the first component and about 0.1 to 15.0 wt. % of the second component. In a second embodiment, the amount of either the first or the second component is in the range of 0.1 to 5 wt. %. In a third embodiment, either component is present in an amount of 0.5 to 3 wt. %. In a fourth embodiment, the system comprises 1-3 wt. % of the first component and 1-3 wt. % of the second component, with the ratio of the first to the second component in the range of 3:1 to 1:3.

In one embodiment and after being diluted with water, the antifreeze composition comprises 1 to 3 wt. % of a branched acid selected from 2-ethylhexanoic acid and 3,5,5-trimethylhexanoic acid; 1 to 3 wt. % of at least one of: benzoic acid, octanoic acid, p-tertbutylbenzoic acid, adipic acid, sebacic acid, and mixtures thereof, in a matrix of 40-55 wt. % (based on the final weight of the diluted composition) of at least one of potassium format, potassium propionate, potassium acetate, dipotassium adipinate, and mixtures thereof. In yet another embodiment, the diluted composition comprises about 40-50 wt. % of at least a non-glycol freezing point depressant material, 1-2 wt. % 2-ethylhexanoic acid and 1-2 wt. % 3,5,5-trimethylhexanoic acid.

Additional/Optional Components: In one embodiment, the antifreeze composition further comprises one or more additional conventional corrosion inhibitors in combination with the above-described components, at concentrations of 0.01-5.0 wt. % (based on the weight of the non-glycol freezing point depressant matrix). Examples of optional conventional corrosion inhibitors include alkali metal borates, alkali metal silicates, alkali metal benzoates, alkali metal nitrates, alkali metal nitrites, alkali metal molybdates, and hydrocarbyl thiazoles. In one embodiment, the additional corrosion inhibitor is selected from hydrocarbyl triazoles, hydrocarbyl thiazoles, sodium metasilicate pentahydrate, organosilane stabilizers, and mixtures thereof. Suitable hydrocarbyl triazoles include aromatic triazoles or alkyl-substituted aromatic triazoles, e.g., benzotriazole or tolyltriazole, at a concentration of 0.1-0.5 wt. % and combinations thereof. In yet another embodiment, the antifreeze composition comprises 0.2 to 5 wt. % of a sulfite or an alkali metal salt of sulfurous acid as an additional corrosion inhibitor.

In one embodiment, the antifreeze composition further contains other additives in an amount of 0.05 to about 0.1 wt. % (based on the weight of the non-glycol freezing point depressant matrix) such as antioxidants, anti-wear agents, detergents, antifoam agents, acid-base indicators, dyes and the like, provided that the additives are soluble and thermally stable at low temperatures.

Examples of antifoam agents include but are not limited to polyalkylene oxide having a molecular weight of from about 1,000 to about 4,000; silicone oils such as dimethylpolysilozane; and organic silicon compounds such as diethyl silicates.

Examples of antioxidants include but are not limited to phenols, such as 2,6di-t-butyl methylphenol and 4,4'-methylene-bis(2,6-di-t-butylphenol); aromatic amines, such as p,p-dioctylphenylamine, monooctyldiphenylamine, phenothiazine, 3,7-dioctylphenothiazine, phenyl-1-naphthylamine, phenyl-2-naphthylamine, alkylphenyl-1-naphthatalamines and alkyl-phenyl-2-naphthal-amines, as well as sulphur-containing compounds, e.g. dithiophosphates, phosphitest, sulphides and dithio metal salts, such as benzothiazole, tin-dialkyldithiophosphates and zinc diaryldithiophosphates.

Examples of antiwear agents include but are not limited to phosphates, phosphate esters, phosphites, thiophosphites, e.g. zinc dialkyl dithiophosphates, zinc diaryldithiophosphates, tricresyl phosphates, chlorinated waxes, sulphurised fats and olefins, such as thiodipropionic esters, dialkyl sulphides, dialkyl polysulphides, alkyl-mercaptanes, dibenzothiophenes and 2,2'-dithiobis(benzothiazole); organic lead compounds, fatty acids, molybdenum complexes, such as molybdenum disulphide, halogen substituted organosilicon compounds, organic silicon compounds, borates and halogen-substituted phosphorus compounds.

Examples of detergents include but are not limited to sulphonates, aromatic sulphonic acids, which are substituted with alkyl having a long chain, phosphonates, thiophosphonates, phonolates, metal salts of alkylphenols, and alkyl sulphides.

In one embodiment, a sufficient amount of at least a base, e.g., NaOH is added to the composition to modify the pH of the formulation to between 7 and 10. In yet another embodiment, a sufficient amount of at least a base is added for the pH to be between 7 and 9.

Method for Making: The corrosion inhibitor combination, optional additives, monoethylene glycol depressant can be blended into the non-glycol based freezing point depressant matrix individually or in various sub-combinations to formulate the antifreeze composition. Depending on the amount of freezing point depressant used, the composition can be in the form of a "concentrate," which can be used as is or to be further diluted.

In one embodiment, an anti-freeze concentrate with 50-90 wt. % of aqueous freezing point depressant is further diluted with about 10-90 vol. % water prior to being used in cooling system or as an anti-freeze/de-icing fluid. In a second embodiment, the anti-freeze composition is diluted with 25 to 60 vol. % water. In a third embodiment, the amount of water added is between 30% to 50 wt. %. In a fourth embodiment, water is added to the antifreeze concentrate for a composition comprising 3 to 9 parts by weight water, from 1 to 2 parts by weight potassium formate, from 1 to 9 parts by weight potassium acetate, optionally up to 1.5 parts by weight urea and optionally up to 1.5 parts by weight of a glycol, and 1 to parts by weight of the corrosion inhibitor combination.

Properties: The composition is characterized as exhibiting excellent protection against the corrosion of metals. The composition is further characterized as being thermally stable.

As used herein, "thermally-stable" means a sample of the antifreeze composition forms less than 2% precipitate when chilled at 0°C. for at least 24 hours. In another embodiment, the term means that the composition is relatively free of precipitates (as visually observed) after being chilled at -15°C. for at least 24 hours. In yet another embodiment, "thermally-stable" means that less than 2% of the composition forms precipitates when chilled at -15°C. for at least 24 hours. In a third embodiment, the term means that less than 1% of the composition forms precipitates when chilled at -15°C. for at least 24 hours. In a fourth embodiment, the composition forms less than 1 wt. % precipitates when chilled at -25°C. for at least 24 hours. As used herein, "precipitate" means broadly to include insolubles, coagulants, flocculants, solids and/or fine particles, needles (from crystallization), crystals, gels, colloidal formations, aggregated or precipitated lumps, clusters, or granules which may suspend, deposit, or settle in the antifreeze composition.

In one embodiment, the composition further exhibits improved thermal stability properties compared to the compositions of the prior art, wherein the composition remains relatively free of insolubles/precipitates at a freezing or sub-freezing temperature and after a period of at least 24 hours. In one embodiment, the composition remains relatively transparent after at least 24 hours at a temperature of less than 0°C. In one embodiment, the composition remains thermally stable at a temperature of less than -5°C. In a second embodiment, the composition remains thermally stable at a temperature of less than - 10°C. In a third embodiment, the composition remains thermally stable at a temperature of less than -20°C.

Applications: Due to the thermal stability of the fluids and the excellent protection provided by the corrosion inhibitors, the antifreeze composition is especially useful in applications where it is desirable to provide long service life with minimal fluid change-outs or fluid modifications once in service. In one embodiment, the antifreeze composition is used in applications in which heat is to be supplied to petroleum materials drilled or transported in cold climates to improve the fluidity and decrease the viscosity of the petroleum materials. In another embodiment, the composition is also useful in conventional applications for heat transfer fluids, such as coolants in industrial engines.

In yet another embodiment, the composition can also be used in de-icing applications for melting ice away from aircrafts, equipment, etc.

The following Examples are given as non-limitative illustration of aspects of the present invention.

### EXAMPLES 36-38, 43-64 AND COMPARATIVE EXAMPLES 1-35, 39-42, 65-93.

Unless specified otherwise, the compositions are prepared by mixing the components in the amounts indicated in Table 2. The components used in the Examples and the corresponding "code" in Table 1 are listed below. All components are commercially available from a number of sources.
Octanoic acid: C8.
2-ethylhexanoic acid: 2-eha.
3,5,5-trimethylhexanoic acid (Cekanoic acid): TMHA.
Sebacic acid: C10b.
Adipic acid: C6b.
-Benzoic acid: BA.
p-tertButylbenzoic acid: PTBA.

Potassium format (KFormate), potassium propionate (Kpropionate), potassium acetate (KAcetate), and dipotassium adipinate: non-glycol-based freezing point depressants.

Mono ethylene glycol (MEG): glycol-based freezing point depressant.

The antifreeze compositions were placed in glass vials and placed in climate chambers maintained at the specified temperatures in the Table. After 24 hours, the glass vials were taken out and visually assessed. Observations about the liquid samples in the examples (as indicated in the Table) were made according to the guidelines in Table 1.

**Table 1**

| | | Not present | Trace | Moderate | Severe |
|---|---|---|---|---|---|
| Haziness | H | - | TH | MH | SH |
| Gel formation | G | - | TG | MG | SG |
| Flocculation | F | - | TF | MF | SF |
| Needles | N | - | TN | MN | SN |
| Precipitation | P | - | TP | MP | SP |

If the liquid is observed to be slightly hazy, a code of "TH" is used. If the liquid is very hazy with trace of precipitate, then "SH+TP" is used. If the liquid is clear, but needles are observed inside (more than just a few) then a code "MN" is used. If the liquid is slightly hazy, with a lot of gel on the glasswall, and with a trace of flocculation, combinations of codes can be used, e.g., "TH+SG+TF." Lastly, if the liquid is clear (no instability) then the "OK" code is used.

In comparative examples 1-13, each antifreeze composition employs 43 wt. % potassium formate (based on the final weight on the composition), the organic acid content in wt. % as specified in the table, a sufficient amount of KOH for the sample pH to be between 10.8 and 11.2, and the remainder water. In comparative examples 14-35, each comparative example employs 22 wt. % potassium formate (based on the final weight of the composition), 16 wt. % potassium propionate, specified organic acid contents, a sufficient amount of KOH for the sample pH to be between 9.8 and 10.2, and water. In examples 36-38, 43-64 and comparative examples 39-42, each example employs 21 wt. % potassium acetate (based on the final weight on the composition), 28 wt. % Mono ethylene glycol (MEG), specified organic acid contents, a sufficient amount of KOH for the sample pH to be between 8.8 and 9.2, and water. In comparative examples 65-93, each example employs 22.8 wt. % dipotassium adipinate (based on the final weight of the composition), specified organic acid contents, a sufficient amount of KOH for the sample pH to be between 9.8-10.2, and water.

It is noted that, as used in this specification and the appended claims, the singular forms "a," "an," and "the," include plural referents unless expressly and unequivocally limited to one referent. As used herein, the term "include" and its grammatical variants are intended to be non-limiting, such that recitation of items in a list is not to the exclusion of other like items that can be substituted or added to the listed items.

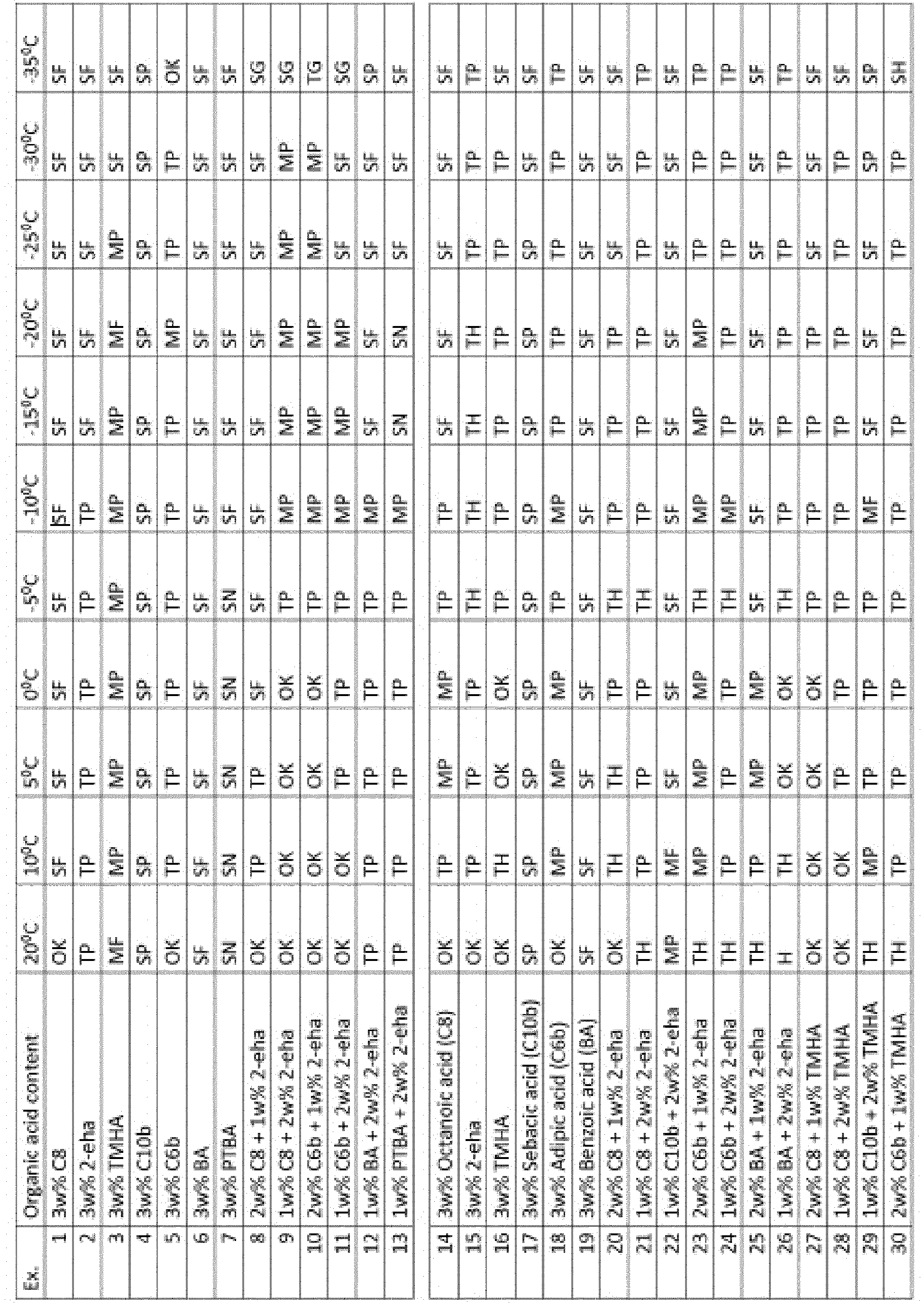

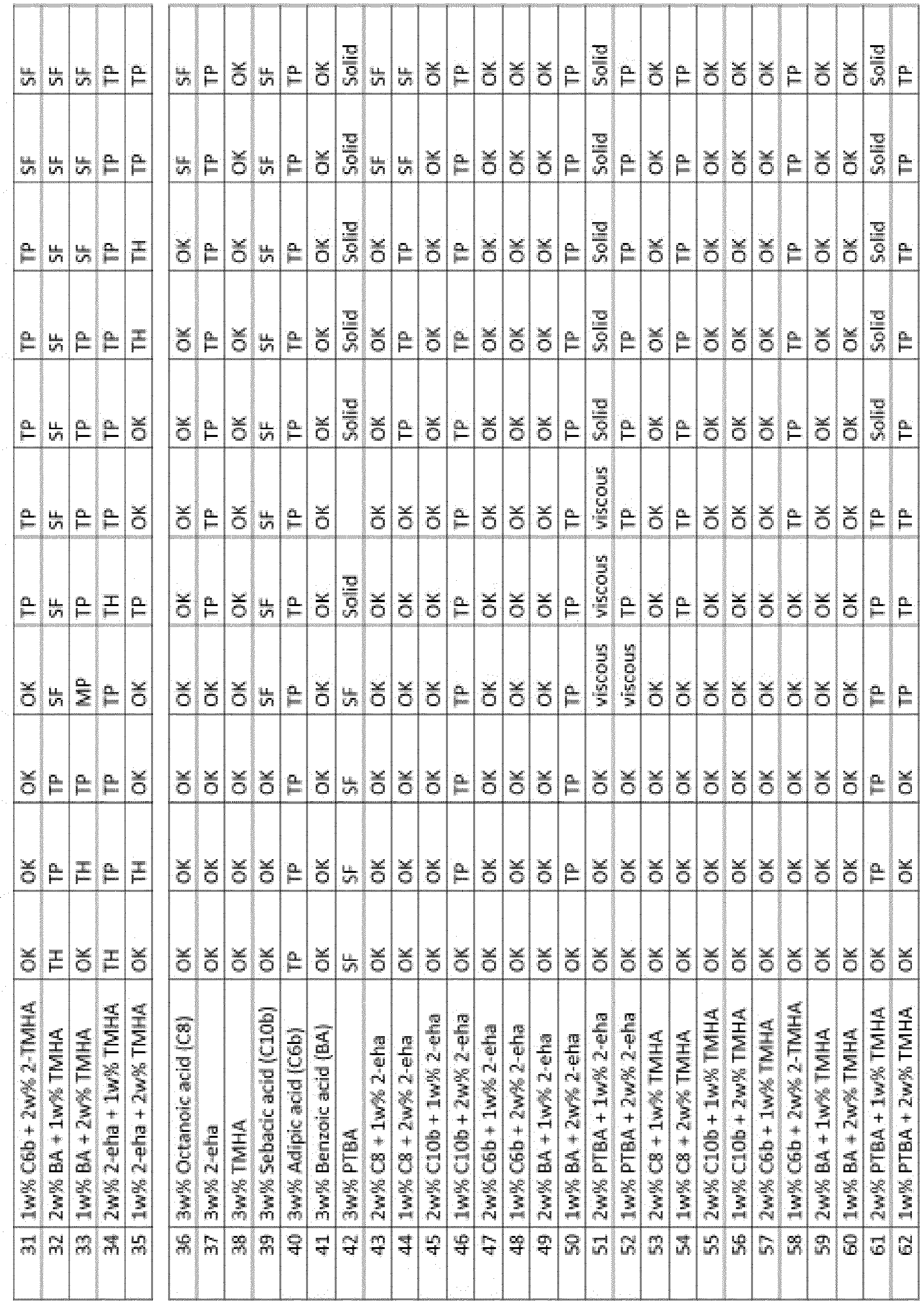

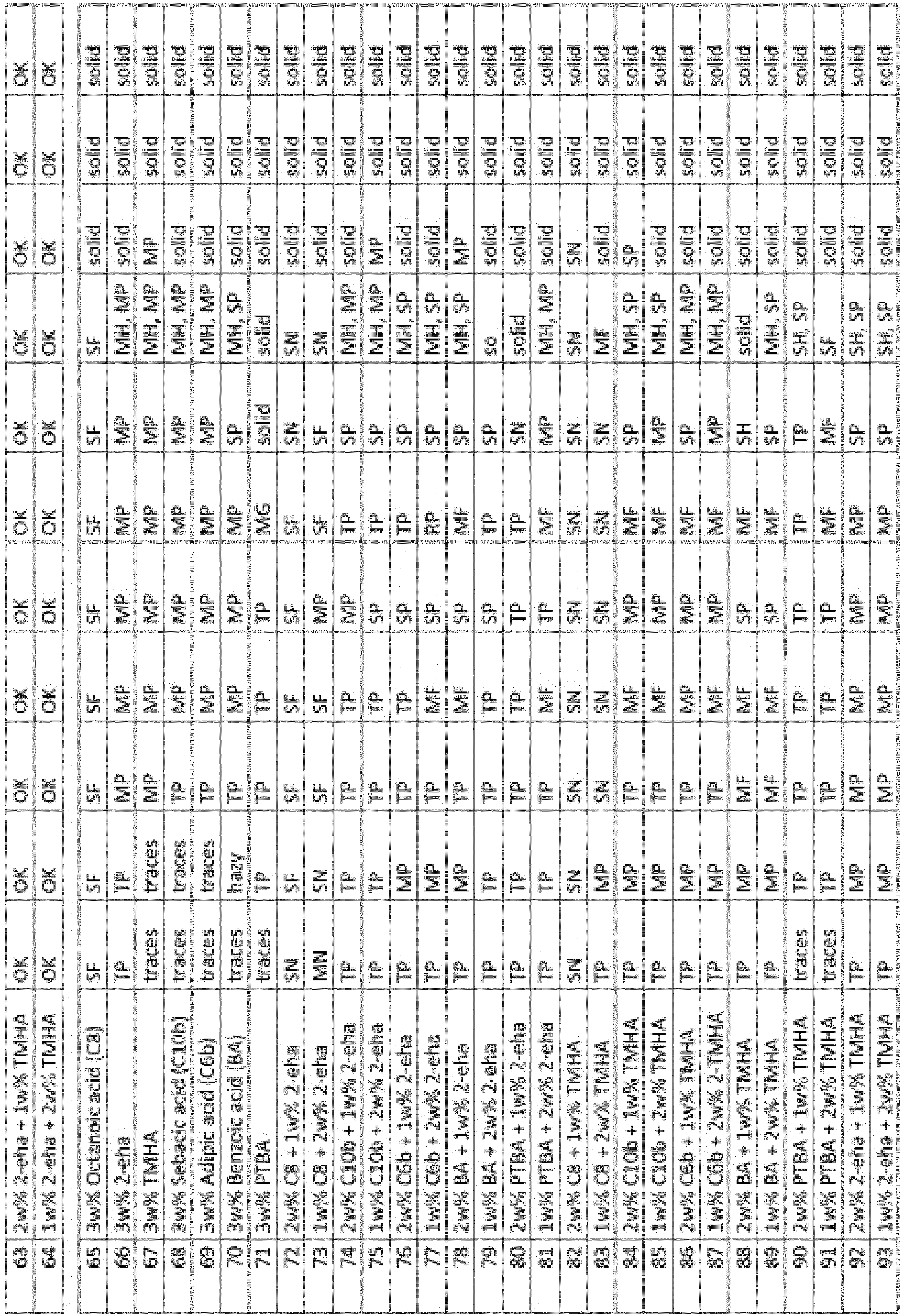

## Claims

1. An antifreeze composition comprising:
a) a freezing point depressant matrix which is a mixture of potassium acetate and monoethylene glycol; and
b) a combination of:
(i) 0.1 to 10 wt. % of one or more branched organic acids (C₅-C₁₆), or alkali- or amino salt of the branched organic acids as a first component; and
(ii) 0.1 to 10 wt. % of one or more linear aliphatic mono- or di-basic acids (C₅-C₁₂), aromatic organic acids (C₇-C₁₈), or substituted aromatic organic acids (C₇-C₁₈) or alkali- or amino salt of the foregoing acids as a second component.

2. The antifreeze composition according to claim 1, wherein the first component is selected from 2-ethylhexanoic acid, isononanoic acid and 3,5,5-trimethylhexanoic acid, and salts thereof.

3. The antifreeze composition according to claim 1, wherein the aliphatic mono acid (C₅-C₁₂) or salt thereof is selected from the group consisting of octanoic acid, nonanoic acid, decanoic acid, undecanoic acid, dodecanoic acid and neodecanoic acid, and mixtures thereof.

4. The antifreeze composition according to claim 1, wherein the aliphatic dibasic acid (C₅-C₁₂) or salt thereof is selected from the group consisting of suberic, sebacic, undecanedioic, dodecanedioic, malonic, succinic, glutaric, adipic, pimelic, azelaic, dicyclopentadienedicarboxylic, phthalic, terephthalic and mixtures thereof.

5. The antifreeze composition according to claim 1, wherein the aromatic organic acids (C₇-C₁₈) or substituted aromatic organic acids (C₇-C₁₈) or salt thereof is selected from the group consisting of benzoic acids, C₁-C₈-alkylbenzoic acids, C₁-C₄-alkoxybenzoic acids, hydroxyl-containing aromatic monocarboxylic acids and halobenzoic acids.

6. The antifreeze composition according to claim 5, wherein the aromatic organic acid or salt thereof is selected from o-methylbenzoic acid, m-methylbenzoic acid, p-methyl benzoic acid and p-tert-butylbenzoic acid; or selected from o-methoxybenzoic acid, m-methoxybenzoic acid and p-methoxybenzoic acid; or selected from o-hydroxybenzoic acid, m-hydroxybenzoic acid, p-hydroxybenzoic acid, o-(hydroxymethyl)benzoic acid, m-(hydroxymethyl)benzoic acid and p-(hydroxymethyl)benzoic acid; or selected from o-fluorobenzoic acid, m-fluorobenzoic acid and p-fluorobenzoic acid.

7. The antifreeze composition of claim 5, wherein the aromatic organic acid is selected from 2-hydroxybenzoic acid, p-tert-butylbenzoic acid, mandelic acid and homophthalic acid and salts thereof.

8. The antifreeze composition according to any preceding claim, wherein a sufficient amount at least a base is added to the composition to modify the pH of the formulation to between 7 and 10.

9. The antifreeze composition according to any preceding claim, wherein the composition is diluted with 25 to 60 vol. % water.

10. The antifreeze composition according to any one of claims 1-8, wherein the composition comprises from 30 to 50 wt. % water.

## Patentansprüche

1. Eine Gefrierschutzmittelzusammensetzung, umfassend:
a) eine Gefrierpunkterniedrigungsmatrix, die eine Mischung aus Kaliumacetat und Monoethylenglykol ist; und
b) eine Kombination von:
(i) 0,1 bis 10 Gew.-% von einer oder mehreren verzweigten organischen Säuren (C₅-C₁₆) oder Alkali- oder Aminosalzen der verzweigten organischen Säuren als erste Komponente; und
(ii) 0,1 bis 10 Gew.-% von einer oder mehreren ein- oder mehrwertigen lineare aliphatischen mono- oder di-basischen Säuren (C₅-C₁₂), aromatischen organischen Säuren (C₇-C₁₈) oder substituierten aromatischen organischen Säuren (C₇-C₁₈) oder Alkali- oder Aminosalzen der vorstehenden Säuren als zweite Komponente.

2. Die Gefrierschutzmittelzusammensetzung nach Anspruch 1, wobei die erste Komponente ausgewählt ist aus 2-Ethylhexansäure, Isononansäure und 3,5,5-Trimethylhexansäure und deren Salzen.

3. Die Gefrierschutzmittelzusammensetzung nach Anspruch 1, wobei die aliphatische Monosäure (C₅-C₁₂) oder ein Salz davon ausgewählt ist aus der Gruppe bestehend aus Octansäure, Nonansäure, Decansäure, Undecansäure, Dodecansäure und Neodecansäure und Mischungen davon.

4. Die Gefrierschutzmittelzusammensetzung nach Anspruch 1, wobei die aliphatische dibasische Säure (C₅-C₁₂) oder ein Salz davon ausgewählt ist aus der Gruppe bestehend aus Suberinsäure, Sebacinsäure, Undecandisäure, Dodecandisäure, Malonsäure, Succinsäure, Glutarsäure, Adipinsäure, Pimelinsäure, Azelainsäure, Dicyclopentadiencarbonsäure. Phthalsäure, Terephthalsäure und Mischungen davon.

5. Die Gefrierschutzmittelzusammensetzung nach Anspruch 1, wobei die aromatischen organischen Säuren (C₇-C₁₈) oder substituierten aromatischen organischen Säuren (C₇-C₁₈) oder deren Salz ausgewählt sind aus der Gruppe bestehend aus Benzoesäuren, C₁-C₈-Alkylbenzoesäuren, C₁-C₄-Alkoxybenzoesäuren, Hydroxylgruppen aufweisenden aromatischen Monocarbonsäuren und Halogenbenzoesäuren.

6. Die Gefrierschutzmittelzusammensetzung nach Anspruch 5, wobei die aromatische organische Säure oder das Salz davon ausgewählt ist aus o-Methylbenzoesäure, m-Methylbenzoesäure, p-Methylbenzoesäure und p-tert-Butylbenzoesäure; oder ausgewählt aus o-Methoxybenzoesäure, m-Methoxybenzoesäure und p-Methoxybenzoesäure; oder ausgewählt ist aus o-Hydroxybenzoesäure, m-Hydroxybenzoesäure, p-Hydroxybenzoesäure, o-(Hydroxymethyl)benzoesäure, m-(Hydroxymethyl)benzoesäure und p-(Hydroxymethyl)-benzoesäure; oder ausgewählt aus o-Fluorbenzoesäure, m-Fluorbenzoesäure und p-Fluorbenzoesäure.

7. Die Gefrierschutzmittelzusammensetzung nach Anspruch 5, wobei die aromatische organische Säure ausgewählt ist aus 2-Hydroxybenzoesäure, p-tert-Butylbenzoesäure, Mandelsäure und Homophthalsäure und deren Salze.

8. Die Gefrierschutzmittelzusammensetzung nach einem der vorhergehenden Ansprüche, wobei der Zusammensetzung eine ausreichende Menge mindestens einer Base zugesetzt ist, um den pH-Wert der Formulierung auf zwischen 7 und 10 zu verändern.

9. Die Gefrierschutzmittelzusammensetzung nach einem der vorhergehenden Ansprüche, wobei die Zusammensetzung mit 25 bis 60 Vol.-% Wasser verdünnt ist.

10. Die Gefrierschutzmittelzusammensetzung nach einem der Ansprüche 1-8, wobei die Zusammensetzung 30 bis 50 Gew.-% Wasser umfasst.

## Revendications

1. Une composition antigel comprenant:
a) une matrice d'un produit abaissant le point de congélation consistant en un mélange d'acétate de potassium et de monoéthylène glycol; et
b) une combinaison:
i) d'un premier constituant formé de 0,1 à 10% en poids d'un ou de plusieurs acides organiques ramifiés en (C₅-C₁₆), ou de sels alcalins ou aminés de ces acides organiques ramifiés; et
ii) d'un second constituant formé de 0,1 à 10% en poids d'un ou de plusieurs acides monobasiques ou dibasiques aliphatiques linéaires en (C₅-C₁₂), acides organiques aromatiques en (C₇-C₁₈), ou acides organiques aromatiques substitués en (C₇-C₁₈) ou d'un ou plusieurs des sels alcalins ou aminés des acides précités.

2. La composition antigel selon la revendication 1, dans laquelle le premier constituant est choisi dans le groupe formé par l'acide 2-éthylhexanoïque, l'acide isononanoïque et l'acide 3,5,5-triéthyl-hexanoïque et les sels en dérivant.

3. La composition antigel selon la revendication 1, dans laquelle l'acide monoaliphatique en (C₅-C₁₂) ou les sels en dérivant sont choisis dans le groupe consistant en acide octanoïque, acide nonanoïque, acide décanoïque, acide undécanoïque, acide dodécanoïque et acide néodécanoïque et les mélanges en dérivant.

4. La composition antigel selon la revendication 1, dans laquelle l'acide dibasique aliphatique en (C₅-C₁₂) ou les sels en dérivant sont choisis parmi les groupes subérique, sébacique, undécanedioïque, dodécanedioïque, malonique, succinique, glutarique, adipique, pimélique, azelaïque, dicyclopentadiènedicarboxylique, phtalique, téréphtalique et leurs mélanges.

5. La composition antigel selon la revendication 1, dans laquelle les acides organiques aromatiques en (C₇-C₁₈), ou les acides organiques aromatiques substitués en (C₇-C₁₈) ou les sels en dérivant sont choisis dans le groupe formé par les acides benzoïques, acides alkylbenzoïques en (C₁-C₈), les acides alkoxybenzoïques en (C₁-C₄), acides aromatiques monocarboxyliques contenant un groupe hydroxyl et les acides halobenzoïques.

6. La composition antigel selon la revendication 5, dans laquelle l'acide organique aromatique ou les sels en dérivant sont choisis dans le groupe formé par l'acide o-méthylbenzoïque, l'acide m-méthyl-benzoïque, l'acide p-méthyl benzoïque et l'acide p-tert-butylbenzoïque, ou sont choisis dans le groupe formé par l'acide o-méthoxybenzoïque, l'acide m-méthoxybenzoïque et l'acide p-méthoxybenzoïque; ou sont choisis dans le groupe formé par l'acide o-hydroxybenzoïque, l'acide m-hydroxybenzoïque, l'acide p-hydroxybenzoïque, l'acide o-(hydroxy-méthyl)-benzoïque, l'acide m-(hydroxyméthyl)-benzoïque, et l'acide p- (hydroxyméthyl)-benzoïque; ou sont choisis dans le groupe formé par l'acide o-fluorobenzoïque, l'acide m-fluorobenzoïque et l'acide p-fluorobenzoïque.

7. La composition antigel selon la revendication 5, dans laquelle l'acide aromatique organique est choisi dans le groupe formé par l'acide 2-hydroxybenzoïque, l'acide p-tert-butylbenzoïque, l'acide mandélique et l'acide homophtalique et les sels en dérivant.

8. La composition antigel selon une quelconque des revendications précédentes, dans laquelle une quantité suffisante d'au moins une base est ajoutée à la composition pour modifier le pH de la formulation à une valeur comprise entre 7 et 10.

9. La composition antigel selon une quelconque des revendications précédentes, dans laquelle ladite composition est diluée par addition de 25 à 60 vol.% d'eau.

10. La composition antigel selon une quelconque des revendications 1-8, dans laquelle la composition comprend de 30 à 50% en poids d'eau.
